# EUROPEAN PATENT SPECIFICATION

(11) **EP 1 514 711 B1**
(45) Date of publication and mention of the grant of the patent: **14.11.2007**
(21) Application number: 02735446.3
(22) Date of filing: 07.06.2002
(51) Int. Cl.: B60J 3/02

(54) **SUN VISOR**
SONNENBLENDE
PARE-SOLEIL

(43) Date of publication of application: 16.03.2005
(73) Proprietor: GRUPO ANTOLIN-INGENIERIA, S.A., 09007 Burgos (ES)
(72) Inventor: UNANUE MURGUIONDO, Inigo, E-20001 San Sebastián (ES); OLIVÀN AHEDO, Carolina, E-09005 Burgos (ES)
(74) Representative: Esteban Perez-Serrano, Maria Isabel
(86) International application number: PCT/ES2002/000278
(87) International publication number: WO 2003/104004

(56) References cited:
- FR-A- 2 814 710
- US-A- 4 908 740
- US-B1- 6 236 373
- US-B1- 6 382 697
- PATENT ABSTRACTS OF JAPAN vol. 1997, no. 10, 31 Octubre 1997 (1997-10-31) & JP 09 156364 A (KASAI KOGYO CO LTD), 17 Junio 1997 (1997-06-17)

## Description

This invention concerns sun visors for motor vehicles, of the type which have some kind of electrical system (lighting, remote control device, electronic screen, audio devices, etc.) and which can be incorporated into the sun visor itself or simply interact with it, as well as the corresponding electrical circuitry and other related features such as connectors, sockets or switches.

This technique provides the basis for two systems where the sun visor is connected to an electrical device, normally a light source that is usually mounted either in the sun visor itself or in another part of the vehicle interior such as the roof lining.

One of these systems is equipped with a switch cover on the mirror, which is opened either by being slid along or lifted up to reveal a system wherein the two terminals make contact with each other to light up the bulb. The system also consists of electrical cables or metal plates that connect to the vehicle battery, with the electric current passing through the sun visor shaft and other components such as switches, sockets or terminals.

An electrical circuit is thus created between the switch connected to the mirror cover and the light source incorporated into the sun visor itself.

The mirror cover is closed before the sun visor closes and the light is switched off when the sun visor reaches the fully closed position.

The other system used to date consists of a sun visor with a lighting system in the roof lining of the vehicle and with the switch cover on the mirror, which slides along or lifts up, on the sun visor itself.

In this system, the light in the roof lining located above the sun visor comes on when the cover is opened.

When the sun visor is closed the metal parts inserted in the visor shaft disconnect from the internal electrical circuit and the light in the roof lining switches off.

Both of these solutions have their limitations, which are as follows:
these systems include a large number of different references, parts and components, making control of orders and replacement parts with suppliers and parts warehouses much more difficult.
the sheer number of different components means that the assembly process consists of numerous operations, some of them laborious and complex such as the soldering of cables, or passing the cables through the interior of the support arm.
the fact that they consist of numerous assembled parts also means that there is a greater likelihood that these parts will break down or not function correctly, thus making the system less reliable.

The process of insertion of wiring, soldering of parts etc. means that assembly of the sun visor is both a difficult and time-consuming task. It also means it is more expensive to manufacture.

It is known from the state of the an a sun visor as the one disclosed in US 6236373 wherein is disclosed a vehicle sun visor having a radio absorptive conductor acting as a radio antenna installed either on a surface of said sun visor while forming an arrangement suitable for effectively receiving radio waves, said conductor being electrically connected to an antenna terminal of an onboard radio system of the car, and acting as a radio antenna: or the conductor is integrated with the sun visor while being inserted into the sun visor during an injection molding process of forming the sun visor using a plastic material. This system implies to use a conductor either in the outer surface of the sun visor or integrated within it, now we propose to inject the tracks and elements of an electrical circuit onto a body-base with the desire shape of the circuit to be formed.

It is an object of this invention to provide a new concept of sun visor, which will lead to a significant reduction in manufacturing phases, and will also reduce the amount of repetition of these phases.

Another object of this invention is to provide a manufacturing system that will enable a number of different electrical functions to be integrated into the body of the sun visor, without the need for additional components, and also at a lower cost than with normally used techniques.

In order to implement these objectives, an embodiment of the invention claims the existence of three basic components:
a casing for the sun visor injected with at least two different materials at least one of which can have conductive plating applied to it, and at least one other that cannot have conductive plating applied to it when the same type of process is used to make said covering; - one or more electrical systems;
other standard components such as a mirror, document pouch, mirror cover, lining, etc.

In order to do this, a plastic lower semi-shell or body-base is made first of all through an injection moulding process. The tracks and elements are then injected onto the body-base, with the desired shape of the circuit being formed. The first plastic material injected in this first phase is the type that cannot have conductive plating applied to it.

Optionally, the body-base of the sun visor can also be manufactured with holes in it depending on the design of the electrical circuits to be incorporated into the visor. These holes will house, partially at least, a second plastic material that will have conductive plating applied to it to form the part of the electrical circuit that will be integrated into the body of the visor.

A second plastic injection moulding process is then carried out on the lower semi-shell or body-base to shape what will be the sun visor's electrical circuit (circuitry, contacts, etc.). The material injected in this case will be a second plastic of the type that can subsequently have conductive plating applied to it.

This subsequent operation consists of the lower semi-shell or body-base being immersed in an electrolytic bath or being coated with conductor material using other methods -normally copper, nickel or silver. This material covers the second plastic material in body-base made during the previous phase.

Once this body-base has been manufactured to form a lower semi-shell, an upper semi-shell with an outer casing coinciding with that of the lower seml-shell is then placed on top it close it. The upper seml-shell has a cavity in it to accommodate other components that can be mounted on the sun visor, such as a mirror, for example.

The remaining additional components are then inserted, including the electrical devices, if these are to be mounted directly on the sun visor, as is usually the case in this technique.

We should point out that, as described above, fewer components will be used with the connector, cables and, where appropriate, the lamp holder and other housings designed to house the corresponding electrical devices being integrated into the body-base.

Similarly, this procedure means the invention is extremely adaptable, enabling it to be used in any number of practical solutions. It ensures that the conductor layer has a uniform thickness, thus allowing electrical current to be transferred to the body-base of the sun visor. At the same time it provides great freedom at the design stage, enabling the sections and outlines of the electrical circuits to be adapted to the specific requirements of each specific sun visor design.

These and other aspects of the invention can be appreciated in greater detail on the attached sheets of drawings, where the following are shown:
Figure 1 is a plan view of the injected body-base.
Figure 2 shows the second plastic injection process carried out on the body-base detailed in Figure 1.
Figure 3 shows the third operation where the body-base is coated with the conductor material.
Figure 4 shows the cross section along the I-I line in Figure 1. This is the section in which the body-base does not have any holes.
Figures 5 and 6 show the cross section along the II-II line in Figure 2 in different versions for the second layer of material.
Figures 7 and 8 show the cross section along the III-III line in Figure 3 in different versions.
Figure 9 shows the cross section along the I-I line in Figure 1. In this version the body-base does have holes.
Figures 10 and 11 show the cross section along the II-II line in Figure 2 in different versions for the second layer of material.
Figures 12 and 13 show the cross section along the III-III line in Figure 3 in different versions.
Figure 14 is a schematic view of the finished sun visor unit with reference to the version shown in Figure 12, for example.

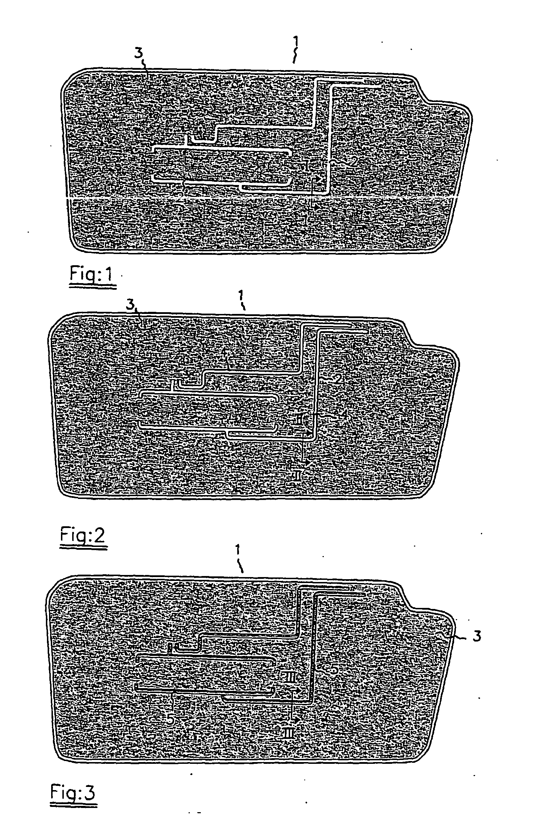

According to Figure 1, we can see the body-base or lower semi-shell (3) of the sun visor (1), which has been formed by injecting a first plastic material that cannot have conductive plating applied to it. It should be pointed out that the majority of commercial plastics that meet these requirements can be used to form the lower semi-shell or body-base.

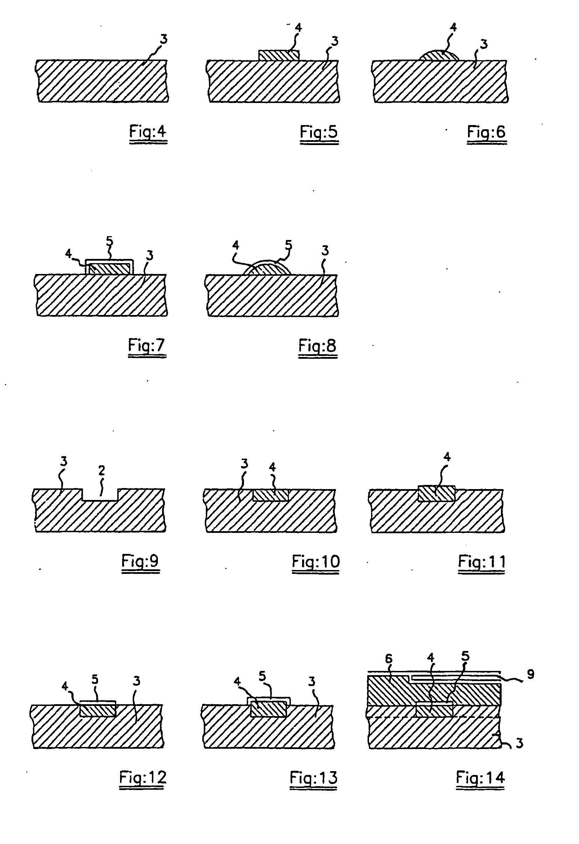

This injection process involves forming both the outer body of lower semi-shell or body-base, and, possibly, the holes(2), if these are needed to form the base for an electrical circuit. The cross sections along the I-I line in Figures 4 and 9 show the lower semi-shell or body-base in both versions, without and with holes respectively.

In accordance with Figure 2, the following stage involves injecting the second plastic material (4), which can have conductive plating applied to it. Should holes (2) need to be formed during this second injection process these shall be covered by the corresponding second plastic material (4). This layer of second plastic mater (4) can be seen in Figures 10 and 11 and completely covers the surface of the holes (2) made beforehand. If no holes have been formed, this second layer of second plastic material (4) will be applied over the first layer of first plastic material, covering the surface corresponding to the outline of the corresponding electrical circuit, as detailed in Figures 5 and 6.

Figure 3 shows the third stage, in which a conductor material (5) has already been applied to the body-base (3).

As the first plastic material used to form the lower semi-shell or body-base is not receptive to the conductor material, only the sections that are coated with the second plastic material (4) that is receptive to the conductor material will be coated with layers of said material (5) -either copper, nickel or silver- to form the electrical circuit for each specific application, for both the one detailed here and any other application (see Figures 7, 8, 12 and 13).

This internal electrical circuit (5) will enable the different functional elements of the sun visor to be integrated, such as the connector, lamp holder, etc., and will also replace the conventional conductor.

Figure 14 provides us with a possible means of assembling the unit according to the diagram of the invention. This process begins with the semi-shell being formed by following the three aforementioned stages.

The upper semi-shell (6) is then placed on top of the lower semi-shell, which may include other features such as the hole (7) to receive a mirror, a light source, a cover (8) with the mirror (9) or the refractors.

Various techniques can be used to manufacture the sun visor shaft such as bi-injection, metallic inserts, standard wiring or MID (moulded interconnect device) technology.

A lining is later applied using standard techniques to complete the assembly of the unit in Figure 14.

## Claims

1. A sun visor for motor vehicles formed by a body which is covered by a lining and having:
- an internal electrical circuit,
- a sun visor shaft from which is accessed the internal circuit by means of conductors connectable to a vehicle's battery and to the internal electric circuit of the sun visor.
**Characterized in that** the body of the sun visor comprises:
- A lower semi-shell (3) or body-base which has been formed by in injecting a first plastic material that cannot have conductive plating applied to it and which acts as a body supporting the internal electrical circuit incorporated into the sun visor,
- A second plastic material (4) injected on the outline of the internal electrical circuit that is to be included in the body of the sun visor, which can have a conductor material (5) plating applied to it,
- A conductor material (5) applied on the second plastic material (4) to generate the internal electrical circuit
- An upper semi-shell (6) made of an injected plastic material which includes a hole (7) to house the mirror (9) which is positioned on the lower semi-shell (3) or body base in order to form said body.

2. A sun visor according to claim 1, **characterised in that** the lower semi-shell (3) incorporates a housing into which an electrical device can be inserted.

3. A sun visor according to claim 1, **characterised in that** the lower semi-shell (3) that forms the body-base has a recess (2) that coincides with the surface to be covered by the second plastic material (4)

4. The method of manufacturing sun visors, particularly for motor vehicles, with an integrated internal electrical circuit according to claim 1, which consists of:
- forming a lower semi-shell or body-base (3) by injecting a first plastic material that cannot have conductive plating applied to it,
- carrying out a second injection on the lower semi-shell (3) with a second plastic material (4) that can have conductive plating applied to it to form the outline of the internal electrical circuit (2) that is to be integrated into the sun visor body
- applying a conductor material (5) -copper, nickel or silver- on the lower semi-shell or body-base (3) over the second plastic material (4) to form the internal electrical circuit of said sun visor,
- covering the lower semi-shell or body-base (3) with an upper semi-shell (6) to form the complete sun visor body.
- optionally inserting a mirror, a light source a cover (8) with a mirror (9) or refractors.
- finishing the unit with a lining using standard techniques.

## Patentansprüche

1. Sonnenblende für Kraftfahrzeuge, gebildet aus einem Körper, der von einer Verkleidung abgedeckt ist und Folgendes umfasst:
- einen inneren elektrischen Stromkreis,
- einen Sonnenblendenschaft, von dem aus der innere Stromkreis mithilfe von Leitern, die an eine Fahrzeugbatterie und an den inneren elektrischen Stromkreis der Sonnenblende angeschlossen werden können, zugänglich ist.
**Dadurch gekennzeichnet, dass** der Köper der Sonnenblende Folgendes umfasst:
- Eine untere Halbschale (3) oder Körperbasis, die durch Einspritzen eines ersten Plastikmaterials gebildet wurde, auf das keine leitende Beschichtung aufgetragen werden kann, und die als Körper dient, der den inneren elektrischen Kreislauf, der in die Sonnenblende eingebaut ist, stützt,
- Ein zweites Plastikmaterial (4), das auf den Umriss des inneren elektrischen Kreislaufs, der in den Körper der Sonnenblende eingeschlossen werden soll, aufgespritzt ist, auf das eine Beschichtung mit einem Leitermaterial (5) aufgetragen werden kann.
- Ein Leitermaterial (5), das auf das zweite Plastikmaterial (4) aufgetragen ist, um den inneren elektrischen Stromkreis zu erzeugen
- Eine obere Halbschale (6) aus einem eingespritzten Plastikmaterial, die ein Loch (7) umfasst, um den Spiegel (9), der auf der unteren Halbschale (3) oder Körperbasis angebracht ist, um den Körper zu bilden, unterzubringen.

2. Sonnenblende nach Anspruch 1, **dadurch gekennzeichnet, dass** die untere Halbschale (3) ein Gehäuse einschließt, in das eine elektrische Vorrichtung eingeführt werden kann.

3. Sonnenblende nach Anspruch 1, **dadurch gekennzeichnet, dass** die untere Halbschale (3), die die Köperbasis bildet, eine Vertiefung (2) aufweist, die mit der Oberfläche, die vom zweiten Plastikmaterial (4) abgedeckt werden soll, zusammenfällt.

4. Verfahren zur Herstellung von Sonnenblenden, insbesondere für Kraftfahrzeuge, mit einem integrierten inneren elektrischen Stromkreis nach Anspruch 1, das Folgendes umfasst:
- Bilden einer unteren Halbschale oder Körperbasis (3) durch Einspritzen eines ersten Plastikmaterials, auf das keine leitende Beschichtung aufgetragen werden kann,
- Durchführen einer zweiten Einspritzung auf die untere Halbschale (3) mit einem zweiten Plastikmaterial (4), auf das eine leitende Beschichtung aufgetragen werden kann, um den Umriss des inneren elektrischen Stromkreises (2) zu bilden, der in den Körper der Sonnenblende integriert werden soll
- Auftragen eines leitenden Materials (5) - Kupfer, Nickel oder Silber - auf die untere Halbschale oder Körperbasis (3) über das zweite Plastikmaterial (4), um den inneren elektrischen Stromkreis der Sonnenblende zu bilden,
- Abdecken der unteren Halbschale oder Körperbasis (3) mit einer oberen Halbschale (6), um den vollständigen Körper der Sonnenblende zu bilden.
- Optional Einführen eines Spiegels, einer Lichtquelle, einer Abdeckung (8) mit einem Spiegel (9) oder Refraktoren.
- Fertigbearbeiten der Einheit mit einer Verkleidung unter Verwendung von Standardtechniken.

## Revendications

1. Un pare-soleil pour véhicules motorisé formé d'un corps qui est recouvert d'une garniture et qui possède:
- un circuit électrique interne,
- un axe de pare-soleil à partir duquel on accède au circuit interne au moyen de connecteurs pouvant être connectés à une batterie de véhicule et au circuit électrique interne du pare-soleil,
**caractérisé en ce que** le corps du pare-soleil comprend:
- Une semi-coque inférieure (3) ou base de corps qui a été formée par l'injection d'un premier matériau plastique sur lequel on ne peut pas appliquer de ferrure conductrice et qui fait office de corps supportant le circuit électrique interne intégré dans le pare-soleil.
- Un second matériau plastique (4) injecté sur le profil du circuit électrique interne qui doit être intégré dans le corps du pare-soleil, sur lequel on peut appliquer une ferrure en matériau conducteur (5).
- Un matériau conducteur (5) appliqué sur le second matériau plastique (4) pour générer le circuit électrique interne.
- Une semi-coque supérieure (6) fabriquée dans un matériau plastique injecté qui comporte un trou (7) pour loger le rétroviseur (9) qui est placé sur la semi-coque inférieure (3) ou base de corps afin de former ledit corps.

2. Un pare-soleil selon la revendication 1, **caractérisé en ce que** la semi-coque inférieure (3) comprend un logement dans lequel un dispositif électrique peut être inséré.

3. Un pare-soleil selon la revendication 1, **caractérisé en ce que** la semi-coque inférieure (3) qui forme la base de corps possède une cavité (2) qui coïncide avec la surface qui doit être recouverte par le second matériau plastique (4).

4. Le procédé de fabrication de pare-soleil, en particulier pour les véhicules motorisés, avec un circuit électrique interne intégré selon la revendication 1, qui consiste à:
- former une semi-coque inférieure ou base de corps (3) en injectant un premier matériau plastique sur lequel on ne peut pas appliquer de ferrure conductrice,
- réaliser une seconde injection sur la semi-coque inférieure (3) avec un second matériau plastique (4) sur lequel on peut appliquer une ferrure conductrice pour former le profil du circuit électrique interne (2) qui doit être intégré dans le corps du pare-soleil,
- appliquer un matériau conducteur (5) -cuivre, nickel ou argent- sur la semi-coque inférieure ou base de corps (3) sur le second matériau plastique (4) pour former le circuit électrique interne dudit pare-soleil,
- recouvrir la semi-coque inférieure ou base de corps (3) avec une semi-coque supérieure (6) pour former le corps de pare-soleil complet,
- éventuellement, insérer un rétroviseur, une source de lumière, un couvercle (8) avec un rétroviseur (9) ou des réfracteurs,
- terminer l'unité avec une garniture en utilisant des techniques standard.
